# EUROPEAN PATENT APPLICATION

(11) **EP 1 160 649 A1**
(43) Date of publication of application: **05.12.2001**
(21) Application number: 00500111.0
(22) Date of filing: 02.06.2000
(51) Int. Cl.: G06F 1/20, H05K 7/20

(54) **Internal refrigeration system for computers**

(71) Applicant: Pena Gonzalez, Roberto, 48902 Barakaldo (Bizkaia) (ES)
(72) Inventor: Pena Gonzalez, Roberto, 48902 Barakaldo (Bizkaia) (ES)
(74) Representative: Perez Bonal, Bernardo

(57) **Abstract**

Internal refrigeration system for computers which involves the use of a Peltier plate (3) between the chip (2) and the heat exchanger (4), increasing the temperature gradient and therefore the rate of flow of heat to be extracted. The heat transported by the cooling liquid to the main radiator (8) is extracted to the outside with the aid of fans (9), with the entire set inside the computer.

## Description

### OBJECT OF THE INVENTION

The invention relates to an internal refrigeration system for computers, installed on a chip corresponding to a processing unit with high heat extraction requirements, or which needs to be refrigerated to operate in conditions with requirements which are higher than nominal ones.

This refrigeration system is characterised by a Peltier effect plate or TEC (thermoelectrical chip) joined to the element to be refrigerated, and with couplings to a heat exchanger.

This heat exchanger is provided with connectors to the intake and outlet tubes of the cooling liquid.

It is characterised by the presence of a radiator inside the computer case in charge of extracting the heat to the exterior.

Said radiator is provided with fans to force the air flow through it.

Lastly, the system is provided with a pump for driving the cooling liquid through the closed circuit formed.

### BACKGROUND OF THE INVENTION

One of the greatest current challenges in developing faster microprocessors is the physical limitations of working with high clock frequencies.

Increasing clock frequencies implies emitting radiation with the immediate effect of raising the temperature of the surrounding area and of the semiconductor itself, modifying its working conditions and eventually causing self destruction of the component.

There are two main strategies by which to approach this problem. One is to reduce the supply voltage for the microprocessor, so that the power emitted is reduced, and the other is to cool the system externally.

Both approaches are generally performed in combination.

The common practice for refrigeration consists of adding a set of dissipation fins to the chip and to also add, whenever required, a fan of a size suitable for the size of the chip and the design of the dissipation fins.

This solution has serious limitations, one being the size of the chip: small areas imply lower heat extraction rates.

The next limitation is the coefficient of heat transmission by convection between the dissipation fins and the air.

This coefficient depends on the nature of the air, and thus this variable cannot be changed, and in addition to other factors it depends on the air flow regime around the fins.

Increasing the air flow implies increasing the turbulence, and therefore the coefficient of transmission; however, this solution is limited by the fan capacity and the annoying noise created.

A further alternative solution consists of the known hydraulic refrigeration systems for CPU's (central processing units) or for installation on graphics cards in their graphics processors, among which is the "Senfu cooling kit" of the Taiwanese company Senfu, or the Athlon K7-20 directly commercialised by the design team.

These cooling systems incorporate a hydraulic radiator joined as closely as possible to the CPU, using a cooling liquid to extract the heat to the outside.

Provided externally is a pump system and a suitably sized radiator with appropriate fans to extract the heat required.

The advantages of this system are a greater coefficient of heat transmission by convection by the use of cooling liquids and the use of radiators and fans without limitation in size according to requirements.

However, there exists the disadvantage of requiring an auxiliary unit external to the system and also of requiring a large element, as after all heat is extracted by air convection.

The present invention serves to correct said disadvantages.

### DESCRIPTION OF THE INVENTION

The invention of the present memory relates to an internal refrigeration system for computers from among those based on hydraulic refrigerants, constructed by coupling a TEC to the unit to be cooled, typically a CPU or the processing unit of a graphics card, and on top of this a heat exchanger with its connector tubes, cooling liquid, inlet and outlet pipes, drive pump and radiator with fans.

Heat extraction from microprocessors by using a hydraulic refrigeration system turns out to be much more efficient than conventional ones which employ dissipation fins combined with fans.

The possibility of maintaining lower temperatures allows to increase the clock frequency and therefore to increase by a similar percentage the processing speed.

In addition to increasing the processing speed the stability of components is increased, as well as their working lifetime by reducing the diffusion of doping elements through the semiconductor material.

In order to integrate the refrigeration system inside the computer, this refrigeration system is provided in addition to its conventional structure with a driving pump for the cooling liquid and an internal radiator with air blowing fans to extract the heat to the outside of the computer case.

The chip cooling system is characterised by a TEC with its cold side solidarily joined to the chip to be cooled and the heat exchanger on its hot side.

The TEC creates a high temperature gradient allows to efficiently extract a greater amount of thermal energy with the exchanger, and later this thermal energy is transported by the cooling liquid to the radiator.

The heat flow from the heat exchanger to the radiator is guaranteed by the pump driving the liquid through the closed circuit.

This refrigeration system is characterised by using a radiator with coupled fans which allows to cool the cooling liquid by expelling the heat to the outside.

### DESCRIPTION OF THE DRAWINGS

As a complement of the description and in order to aid a better understanding of the characteristics of the invention, the present memory is accompanied y a set of drawings where for purposes of illustration only and in no way meant as a definition of the limits of the invention, the following is shown:

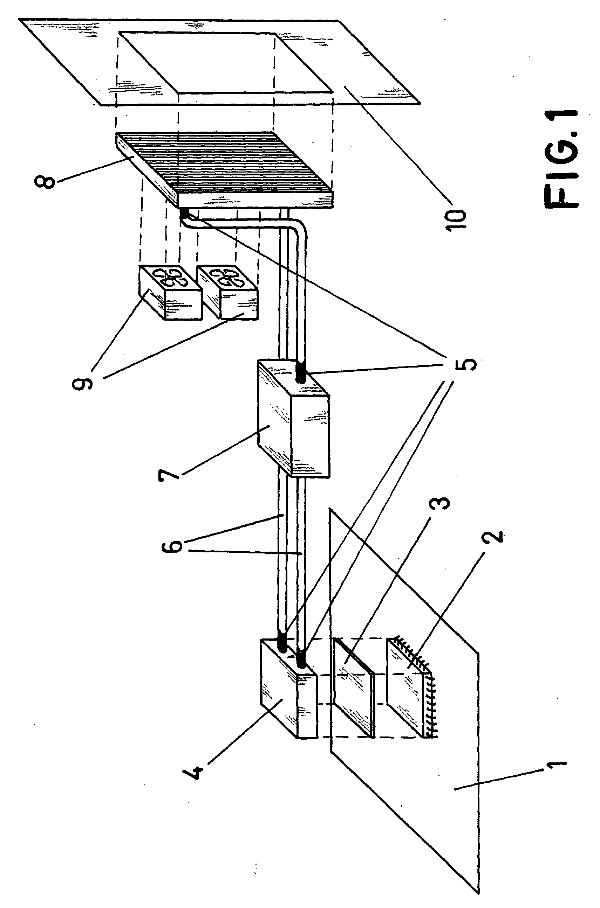

figure 1 is a sketch of the system.

### PREFERRED EMBODIMENT OF THE INVENTION

In view of the above, the present invention relates to an internal refrigeration system for computers.

A Peltier effect plate or TEC (3) suitably polarised is joined on its cold side to the upper surface of the chip (2) of board (1) to be refrigerated, while on the hot side of the TEC is provided a heat exchanger (4).

Heat exchanger (4) has an inlet and an outlet for the cooling liquid, connected by connector tubes (5) to pipes (6) which allow exchange of the cooling liquid with radiator (8).

The cooling liquid responsible for transporting the heat from exchanger (4) to radiator (8) is driven by a pump (7) which is interposed in the circuit.

Junction of pipes (6) to heat exchanger (4), drive pump (7) and radiator (8) is performed by connector tubes (5).

Radiator (8) is fitted into a slot of board (10) of the computer case, through which the hot air is evacuated to the outside.

The air is forced through radiator (8) by fans (9), increasing the heat exchange between the cooling liquid and the air.

## Claims

1. Internal refrigeration system for computers **characterised in that** it is provided with a Peltier effect plate (3) to be placed on microprocessor (2), a heat exchanger (4) on the Peltier effect plate (3), connection tubes (6) between exchanger (4) and radiator (8) for transporting the cooling liquid, and the radiator being joined to an air fan (9)

2. Internal refrigeration system for computers as claimed in above claim, **characterised in that** the radiator (8) and fan (9) set is placed inside the computer case.

3. Internal refrigeration system for computers as claimed in above claims, **characterised in that** cooling radiator (8) is provided with more than one fan (9).
